# EUROPÄISCHE PATENTSCHRIFT

(11) **EP 1 776 223 B1**
(45) Veröffentlichungstag und Bekanntmachung des Hinweises auf die Patenterteilung: **14.04.2010**
(21) Anmeldenummer: 05762918.0
(22) Anmeldetag: 21.07.2005
(51) Int. Cl.: B29C 47/08, B29C 47/38, B29C 47/40, B29C 47/66

(54) **VORRICHTUNG UND VERFAHREN ZUR VERARBEITUNG EINES MATERIALS MITTELS ZWEISCHNECKENEXTRUDER**
DEVICE AND METHOD FOR PROCESSING A MATERIAL BY MEANS OF A TWIN-SCREW EXTRUDER
DISPOSITIF ET PROCEDE DE TRAITEMENT D'UNE MATIERE AU MOYEN D'UNE EXTRUDEUSE DOUBLE VIS

(30) Priorität: 05.08.2004 DE 102004037978
(43) Veröffentlichungstag der Anmeldung: 25.04.2007
(73) Patentinhaber: KraussMaffei Technologies GmbH, 80997 München (DE)
(72) Erfinder: SCHNEIDER, Hans-Peter, 81825 München (DE)
(74) Vertreter: Zollner, Richard
(86) Internationale Anmeldenummer: PCT/EP2005/053537
(87) Internationale Veröffentlichungsnummer: WO 2006/032555

(56) Entgegenhaltungen:
- EP-A- 0 775 569
- DE-C1- 19 911 820

## Beschreibung

Die Erfindung betrifft eine Vorrichtung zur Verarbeitung eines Materials, beispielsweise Kunststoff, Kautschuk oder dergleichen, mit einem Extruder, wobei der Extruder mindestens zwei Schnecken zur Bearbeitung des Materials aufweist, wobei die Schnecken rotierbar in einem Gehäuse gelagert sind und mittels mindestens eines Antriebs antreibbar sind und wobei Übertragungselemente zur Übertragung der Kraft zwischen den Schnecken und dem Antrieb vorgesehen sind. Die Erfindung betrifft ferner ein Verfahren zum Betreiben einer Vorrichtung zur Verarbeitung eines Materials, wobei die Schnecken mittels mindestens eines Übertragungselements am Antrieb gekoppelt werden, wobei die Schnecken durch den Antrieb in einer ersten Drehrichtung betrieben werden, und wobei die Verarbeitung von Material gestoppt wird.

Vorrichtungen zur Verarbeitung eines Materials mit einem Extruder sind in der Praxis seit langem bekannt. Solche Extruder werden zur Verarbeitung von Material verwendet, beispielsweise zur Plastifizierung oder Aufschmelzung von Kunststoff und Kautschuk, aber auch in der Lebensmittelindustrie. Insbesondere Zwei- oder Mehrschneckenextruder sind bei der Aufschmelzung bzw. Plastifizierung von Material besonders gut einsetzbar. Die Schnecken sind gleich oder gegensinnig rotierbar in einem Gehäuse gelagert, wobei die Schnecken mittels eines Antriebs antreibbar sind (Siehe z.B die DE 19911820 C1 oder die EP 0775569 A1). Die Schnecken sind dabei über Übertragungselemente mit dem Antrieb verbindbar. Die Drehrichtung der Schnecken ist hierbei durch den Verlauf der Schneckengänge und die Austragsrichtung des zu verarbeitenden Materials vorgegeben. Die Schnecken, insbesondere deren Enden, der Antrieb und/oder deren oder die Übertragungselemente sind im Stand der Technik derart ausgestaltet, das jeweils eine Schnecke mittels eines bestimmten, ihr fest zugeordneten Übertragungselements in einer bestimmten Position mit dem Antrieb verbindbar sind und der Antrieb in eine einzige, vorgegebene Richtung dreht.

Für bestimmte Anwendungen, beispielsweise für die industrielle Fertigung von Halbzeugen, wie Hart-PVC-Dryblend, werden häufig Doppelschneckenextruder eingesetzt, da die Anforderungen, die hier an den Extruder gestellt werden, durch diese Maschinen besonders gut erfüllt werden. Hervorzuheben ist z. B. ein guter konstanter Materialeinzug, eine schonende Materialaufbereitung und hohes Druckaufbauvermögen. Für solche Verfahrensaufgaben werden in der Praxis häufig gegenläufige, dichtkämmende Doppelschneckenextruder bevorzugt. Ein weiterer Vorteil der gegenläufigen Doppelschneckenextruder ist die Selbstreinigung, die sich durch die Zwangsförderung ergibt. Andere Vorrichtungen, wie beispielsweise gleichläufige Doppelschneckenextruder, Kaskadenextruder und Planetenwalzenextruder oder dergleichen sind ebenfalls für ähnliche oder andere Verfahrensaufgaben vorteilhaft.

Aufgrund der Drehung der Schnecken und der Befüllung des Gehäuses und der Verarbeitung des Materials treten in der Regel während des Betriebs eines Extruders Kräfte auf, welche die Schnecken in Kontakt mit dem Gehäuse bringen. Bei einem gegenläufigen, dichtkämmenden Doppelschneckenextruder treten beispielsweise resultierende Kräfte auf, welche die Schnecken im Bereich einer Winkelebene von ca. 45° zur Achsebene der Doppelschnecke gegen die Gehäusewand pressen. Durch den Festkörper-Festkörper-Kontakt des Schneckenaußenumfangs und der Gehäusewand kommt es zum Adhäsionsverschleiß. Dieser Adhäsionsverschleiß macht den Hauptanteil des Verschleißes am Gehäuse und den Schnecken bei Doppelschneckenextrudern aus. Mit zunehmender Laufleistung des Extruders nimmt wegen der kontinuierlich wirkenden Kräfte auch der Verschleiß am Gehäuse zu.

Es gibt nun verschiedene Möglichkeiten, um den Verschleiß am Gehäuse und den Schnecken zu minimieren. Eine solche Verschleißschutzmaßnahme offenbart die DE 39 35 970 A1, die einen Extruder mit einem Gehäuse zeigt, in dem Schnecken rotierbar gelagert sind. Das dort gezeigt Gehäuse, ist als Extrusionszylinder ausgestaltet, dass aus einem Stahlmantel und in diesen eingesetzten Büchsen aus Hartmetall oder vergleichbaren Werkstoffen besteht. Zur Minimierung des Verschleißes am Extrusionszylinder ist vorgesehen, dass mehrere in den Stahlmantel eingeschrumpfte Büchsen, welche radial und axial arretiert sind und gegen eine erste Büchse axial vorgespannt sind, vorgesehen sind. Tritt nun Adhäsionsverschleiß auf, so werden diese Büchsen einfach ausgetauscht und somit die Gebrauchszeit des Extrusionszylinders erhöht.

Eine andere Möglichkeit ist die Tiefennitrierung des Gehäuses. Dies bedeutet allerdings, dass die Oberflächenhärte des Gehäuses mit zunehmendem Verschleiß abnimmt. Nach einem von der Festigkeit des verwendeten Materials abhängigen Durchmesserverschleiß nimmt die Festigkeit des Gehäuses erheblich ab. Der Verschleiß am Gehäuse schreitet nach Überschreiten dieser Grenze überproportional voran. Bei einem Gehäuse-Durchmesserverschleiß von beispielsweise 1,0 mm wird das Radialspiel zwischen Schneckenaußendurchmesser und Gehäusebohrung bei bestimmten Verfahrensaufgaben so groß, dass es zu Materialablagerungen an der Gehäusewand kommt. Die Folge ist, dass sich Material an der Wand des Gehäuses anlagert und verbrennt. Diese verbrannten Partikel können dann im extrudierten Produkt erscheinen und somit zu Produktionsausschuss führen. Eine derart beschädigte Vorrichtung kann nicht mehr betrieben werden und das Gehäuse muss gegen ein neues Gehäuse ausgetauscht werden. Dieser Austausch des Gehäuses ist mit hohen Investitionskosten verbunden.

Der vorliegenden Erfindung liegt daher die Aufgabe zugrunde, eine Vorrichtung zur Verarbeitung eines Materials sowie ein Verfahren zum Betreiben einer Vorrichtung zur Verarbeitung eines Materials der eingangs genannten Art anzugeben, wonach eine möglichst kostengünstige Verlängerung der Standzeit der Vorrichtung ermöglicht wird.

Erfindungsgemäß wird die voranstehende Aufgabe durch eine Vorrichtung zur Verarbeitung eines Materials mit den Merkmalen des Patentanspruchs 1 gelöst. Danach ist die in Rede stehende Vorrichtung zur Verarbeitung eines Materials derart ausgestaltet und weitergebildet, dass die Schnecken bezüglich ihrer Position austauschbar sind und dass die Drehrichtung der Schnecken umkehrbar ist.

Des weiteren ist die obige Aufgabe im Hinblick auf ein Verfahren zum Betreiben einer Vorrichtung zur Verarbeitung eines Materials durch ein Verfahren mit den Merkmalen des Patentanspruchs 8 gelöst. Danach ist ein Verfahren der eingangs genannten Art derart ausgestaltet, dass die Schnecken in ihrer Position getauscht und in einer umgekehrten Drehrichtung betrieben werden.

In erfindungsgemäßer Weise ist erkannt worden, dass man in Abkehr zu der bisherigen Praxis nicht allein durch Maßnahmen des Verschleißschutzes am Gehäuse die Standzeit des Gehäuses erhöhen kann, sondern dass eine Erhöhung der Standzeit auch dadurch erfolgen kann, dass das Gehäuse an unterschiedlichen Bereichen verschlissen wird. Dies wird in technischer Hinsicht in besonders einfacher und raffinierter Weise dadurch erreicht, dass die Schnecken und/oder der Antrieb und/oder Übertragungselemente derart ausgestaltet sind, dass jeweils die Schnecken an unterschiedlichen Positionen mit dem Antrieb koppelbar ist. Dies könnte vorzugsweise durch eine im Wesentlichen gleiche Gestaltung der Übertragungselemente erreicht werden. Die Übertragungselemente könnten hierbei integraler Bestandteil der Schnecken und/oder des Antriebs sein, beispielsweise zusammenwirkende Endstücke der Schnecken und des Antriebs, oder als separates Element ausgestaltet sein, das mit den Schnecken und dem Antrieb zusammenwirkt, um eine im Wesentlichen drehfeste Verbindung der jeweiligen Schnecke und dem Antrieb zu bilden. Die Schnecken können also getauscht werden, wodurch sich während des Betriebs die auf die Schnecken wirkenden Kräfte verändern, da sich das Druckprofil verändert. Durch ein Tauschen der Schnecken verändert sich demnach der Bereich, in dem Adhäsionskräfte zwischen Schnecken und Gehäuse zum Verschleiß führen. Hierbei müssen nicht alle Schnecken in ihrer Position bezüglich der Anordnung im Gehäuse und/oder bezüglich ihrer Position am Antrieb getauscht werden, es können beispielsweise auch nur einzelne Schnecken gegeneinander getauscht werden. Somit tritt Verschleiß zwar auf, aber dieser in anderen Bereichen des Gehäuses auftretende Verschleiß ermöglicht es, die Standzeit des Gehäuses deutlich zu erhöhen, teils ca. zu verdoppeln. Unter Material kann im diesem Zusammenhang auch jedwede Kombination von Materialien, Fasern, Füllstoffen oder dergleichen verstanden werden.

In besonders vorteilhafter Weise könnte der Antrieb mindestens einen in zwei Drehrichtungen betreibbaren Motor umfassen. Dies würde bedeuten, dass in der ersten Drehrichtung, beispielsweise bei einem gegensinnig drehenden Doppelschneckenextruder, eine erste Schnecke im Uhrzeigersinn und eine weitere Schnecke entgegen des Uhrzeigersinns betrieben würde. Wird nun die Position der ersten Schnecke und die der zweiten Schnecke getauscht, so könnte für einen normalen Betrieb die erste Schnecke nunmehr entgegen des Uhrzeigersinns und die zweite Schnecke nunmehr im Uhrzeigersinn betrieben werden. Die resultierenden Kräfte bewirken somit einen Verschleiß im Gehäuse, der an anderen Bereichen des Gehäuses auftritt. In diesen Bereichen ist nach vorherigem Betrieb in der ersten Drehrichtung noch die maximale Oberflächenhärte vorhanden, so dass das Gehäuse eine deutlich erhöhte Standzeit eingesetzt werden kann. Zudem führen die veränderten Kräfte auch zu einem veränderten Verschleiß an den Schnecken, so dass auch die Laufzeit der Schnecken unter Umständen verlängert werden kann.

Hinsichtlich einer besonders einfachen Art der Kopplung könnte das Übertragungselement als Kupplungshülse ausgestaltet sein. Die Kupplungshülse könnte dabei eine Feinverzahnung, beispielsweise eine Innenverzahnung, oder Nuten aufweisen, wobei der Antrieb und die mit dem Antrieb zu koppelnden Enden der Schnecken eine komplementäre Feinverzahnung, beispielsweise eine Außenverzahnung, oder komplementäre Federn oder dergleichen aufweisen könnten. Die Kupplungshülse könnte dann über die einsprechenden Teile des Antriebs und der Schnecken aufschiebbar sein, so dass eine im Wesentlichen drehfeste Kopplung zwischen den Schnecken und dem Antrieb ermöglicht wird. Eine kostengünstige Kopplung zwischen Antrieb und Schnecken wäre somit in besonders einfacher Weise realisiert. Es könnte allerdings auch jedwede andere Art der Kopplung gewählt werden, so beispielsweise, dass der Antrieb und die Schnecke derart ausgestaltet sind, dass eine direkte Kopplung ermöglich ist. Die Übertragungselemente können somit als integraler Bestandteil der Schnecke und/oder des Antriebs ausgestaltet sein, beispielsweise durch eine komplementäre Ausgestaltung des mit dem Antrieb zu koppelnden Schneckenendes und der oder den Welle/-n des Antriebs. Die Übertragungselemente könnten beispielsweise auch als Zahnräder oder dergleichen ausgestaltet sein, die entweder integraler Bestandteil der Schnecken und/oder des Antriebs sind oder aber mit diesen in jedweder Form verbunden sein könnten. In weiter vorteilhafter Weise könnten die Übertragungselemente derart ausgestaltet sein, dass die radiale Stellung der Schnecke fest vorgebar ist. Dies könnte durch ein Kopplungsprofil der Übertragungselemente erreicht werden, dass die Kopplung lediglich in einer Stellung ermöglicht ist, beispielsweise durch spezielle komplementäre Innen- und Außenverzahnung. Dies könnte in besonders einfacher Weise durch Zuschweißen eines Zahnfußes oder einer Zahnlücke und das Ausfräsen eines entsprechenden Zahns erfolgen. Somit könnte eine Nullstellung der Schnecken und/ des Antriebs definiert werden.

Im Hinblick auf eine wiederum besonders vorteilhafte Ausgestaltung könnte der Antrieb mindestens ein Getriebe umfassen. Das Getriebe könnte dabei zur Kraftübertragung Zahnräder und/oder Ritzel aufweisen. Nach einem Tausch der Schnecken und Umkehrung der Drehrichtung würde somit auch das Getriebe in umgekehrter Richtung drehen, so dass der Verschleiß an den Zahnflanken jedes Zahnrads und/oder Ritzels optimiert wird, da nunmehr andere Zahnflanken belastet werden, die vorher nicht belastet waren. Alternativ könnten die Schnecken allerdings ebenso gut auch jeweils durch einen eigenen Antrieb direkt antreibbar sein. Dann könnten beispielsweise Schnecken und Antrieb insgesamt in ihrer Position austauschbar sein.

Im Rahmen einer besonders bevorzugten Ausgestaltung zur Verarbeitung von speziellen Materialien könnte der Extruder als gegensinnig drehender Doppelschneckenextruder ausgestaltet sein. Es könnten allerdings auch jedwede andere Art von Extruder, beispielsweise Kaskaden- oder Planetenwalzenextruder oder dergleichen denkbar sein: Die Wahl des passenden Extruders hängt dabei von der gestellten Verfahrensaufgabe ab. Die Schnecken könnten in allen Fällen beispielsweise als parallele Schnecken oder als konische Schecken ausgestaltet sein.

In einer weiteren Ausgestaltung könnte ein Getriebe zur Verwendung mit einer Vorrichtung nach obigen Ausführungen vorgesehen sein, wobei das Getriebe zur Kraftübertragung mindestens ein Zahnrad und/oder mindestens ein Ritzel aufweist. Das Getriebe könnte derart ausgestaltet sein, dass zur Kraftübertragung in unterschiedliche Drehrichtungen das Zahnrad und/oder das Ritzel gleiche Übertragungseigenschaften aufweist.

Im Rahmen einer bevorzugten Ausgestaltung könnten beide Profile der kraftübertragenden Flanken der Zähne des Zahnrads und/oder Ritzels derart ausgebildet sind, dass bei beiden Drehrichtungen im Wesentlichen die gleichen Übertragungseigenschaften aufgewiesen werden, vorzugsweise gleiche maximalen Kräfte übertragbar sind. Dies könnte dadurch erreicht werden, dass beide Flanken der einzelnen Zähne des Zahnrads oder der Zahnräder und/oder des oder der Ritzel im Wesentlichen das gleiche Profil aufweisen. In der Regel ist das Profil der Flanken zur Übertragung von hohen Drehmomenten mit mindestens einer Krümmung, beispielsweise der Form einer Evolventenverzahnung, einer Kreisbogenverzahnung, einer Zyloidenverzahnung oder dergleichen, versehen, so dass der beim Ineinandergreifen der Flanken entstehende Druck auf einen größeren Bereich der Flanke verteilt wird und eine punktförmige oder linienförmige Belastung der Flanken vermindert wird. Dies könnte insbesondere durch eine Höhen- und Breitenkorrektur der Zähne erreicht werden. Dies führt zu einer Erhöhung der Lebensdauer des Getriebes, da die Belastung der einzelnen Zahnräder optimiert ist. Hierbei ist zu beachten, dass die maximale Kraftübertagung für den ständigen Betrieb des Getriebes ermöglicht sein sollte.

Das erfindungsgemäße Verfahren könnte insbesondere zum Betreiben einer Vorrichtung gemäß den obigen Ausführungen dienen. Bei dem Verfahren ist vorteilhaft, dass durch den Tausch der Schnecken die Standzeit des Gehäuses erhöht werden kann. Während des Betriebs in der anderen Drehrichtung verändern sich die auf die Schnecken wirkenden Kräfte, so dass sich das im Gehäuse herrschende Druckprofil verändert. Durch ein Tauschen der Schnecken verändert sich demnach der Bereich, in dem Adhäsionskräfte zwischen Schnecken und Gehäuse zum Verschleiß führen. Somit tritt zwar Verschleiß auf, aber dadurch, dass dieser an anderen Bereichen des Gehäuses auftritt, ist es ermöglicht, die Standzeit des Gehäuses deutlich zu erhöhen, bevor es zu Ablagerungen und Verbrennung des Materials im Gehäuse und zu Schädigungen des extrudierten Produkts kommt. Je nach Art des Extruders und/oder des verarbeiteten Materials wird die Verarbeitung des Materials gestoppt. Dieser Betriebspunkt könnte je nach Verfahrensaufgabe unterschiedlich gewählt werden. Es könnte beispielsweise der Betriebspunkt so gewählt werden, dass der auftretenden Verschleiß noch so gering ist, dass sich die Ablagerung des Produkts am Verschleißbereich zu keiner wesentlichen Schädigung des Produkts führt. In vorteilhafter Weise könnte der Betriebspunkt allerdings so gewählt werden, dass der Verschleiß und die daraus resultierenden Schädigungen zu einer Unbrauchbarkeit des Produkts führen. Die Betriebsdauer könnte sich somit nach der Art des Gehäuses und des verarbeiteten Materials richten und könnte je nach Verschleiß des Gehäuses und/oder der Schnecken und/oder der Empfindlichkeit des Materials und/oder Produkts auszuwählen. Der Betriebspunkt, an dem die Produktion gestoppt wird, könnte daher teils für zu verarbeitende Materialien berechnet werden oder aus Erfahrungswerten bestimmt werden, aber zumindest aus der Qualität des extrudierten Produkts bestimmt werden. Das Verfahren ist entsprechend auf mehr als zwei Schnecken erweiterbar, wobei hier alle oder lediglich einzelne Schnecken getauscht werden könnten.

Sollte der Extruder als Doppelschneckenextruder ausgestaltet sein, ist im Rahmen einer bevorzugten Ausgestaltung eine erste Schnecke mittels eines Übertragungselements an einer ersten Position an den Antrieb gekoppelt und eine zweite Schnecke mittels eines weiteren Übertragungselements an einer zweiten Position an den Antrieb gekoppelt. Die Schnecken werden durch den Antrieb in einer ersten Drehrichtung betrieben werden und die Verarbeitung von Material wird gestoppt und die erste und die zweite Schnecke werden entkoppelt und die erste Schnecke wird mittels des oder des weiteren Übertragungselements an der zweiten Position des Antriebs und die zweite Schnecke wird mittels des oder des weiteren Übertragungselements an der ersten Position des Antriebs gekoppelt und die Schnecken werden durch den Antrieb in einer zweiten Drehrichtung betrieben werden.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 8 nachgeordneten Patentansprüche und andererseits auf die nachfolgende Erläuterung eines bevorzugten Ausführungsbeispiels einer erfindungsgemäßen Vorrichtung zur Verarbeitung eines Materials anhand der Zeichnung zu verweisen. In Verbindung mit der Erläuterung des bevorzugten Ausführungsbeispiels der erfindungsgemäßen Vorrichtung und des erfindungsgemäßen Verfahrens anhand der Zeichnung werden auch im Allgemeinen bevorzugte Ausgestaltungen und Weiterbildungen der Lehre erläutert. In der Zeichnung zeigt
- Fig. 1: in einer geschnitten, schematischen Darstellung ein Ausführungsbeispiel einer erfindungsgemäßen Vorrichtung zur Verarbeitung eines Materials, wobei die Vorrichtung in erster Drehrichtung betrieben wird, und
- Fig. 2: in einer geschnitten, schematischen Darstellung das Ausführungsbeispiel der Vorrichtung gemäß Fig. 1 mit geändertem Drehsinn.

In dem in den Fig. gezeigten Ausführungsbeispiel ist eine Vorrichtung zur Verarbeitung eines Materials, in diesem Falle Kunststoff, dargestellt. Die Vorrichtung umfasst einen Extruder, wobei der Extruder zwei Schnecken 1, 2 zur Plastifizierung von Kunststoff aufweist. Die Schnecken 1, 2 sind rotierbar in einem Gehäuse 3 gelagert, das in diesem Fall als Zylinder ausgestaltet ist. Ferner sind die Schnecken 1, 2 mittels eines nicht dargestellten Antriebs antreibbar, wobei die Schnecken 1, 2 und der Antrieb über zwei ebenfalls nicht dargestellte Übertragungselemente koppelbar sind.

Erfindungsgemäß sind die Übertragungselemente derart ausgestaltet, dass die Schnecken 1, 2 bezüglich ihrer Position austauschbar sind und dass die Drehrichtung der Schnecken 1, 2 umkehrbar ist. In diesem Ausführungsbeispiel ist jeweils jede Schnecke 1, 2 mittels jedes Übertragungselements in unterschiedlichen Positionen mit dem Antrieb koppelbar.

Der - nicht dargestellte - Antrieb umfasst einen in zwei Drehrichtungen betreibbaren Motor sowie ein Getriebe. Die Übertragungselemente sind als Kupplungshülsen ausgestaltet, wobei die Schnecken 1, 2 und das Getriebe zu den Kupplungshülsen komplementär ausgestaltete Endstücke aufweisen, welche mittels der Kupplungshülsen zu einer drehfesten Verbindung gekoppelt werden. Der Extruder ist hierbei als dichtkämmender, gegensinnig drehender Doppelschneckenextruder ausgestaltet.

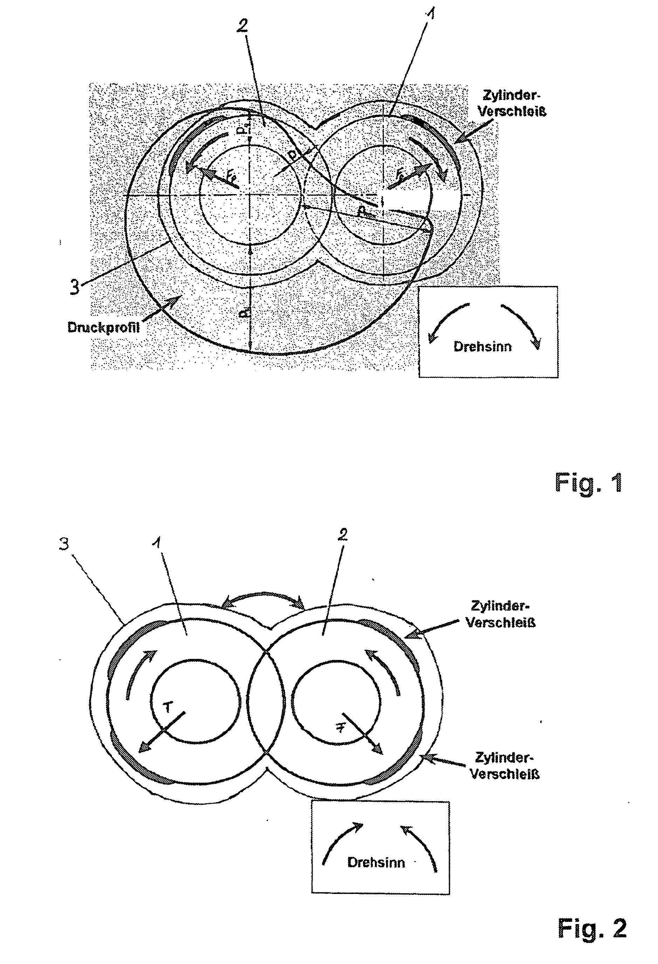

Im Betrieb wird nunmehr die erste Schnecke 1 mit dem ersten Übertragungselement gekoppelt und die zweite Schnecke 2 mit dem zweiten Übertragungselement. Der Antrieb treibt die erste Schnecke 1 im Uhrzeigersinn und die zweite Schnecke 2 entgegen des Uhrzeigersinns an. Fig. 1 zeigt das Druckprofil sowie die Drehrichtungen der einzelnen Schnecken 1, 2 und die wirkenden Anpresskräfte F. Die Schnecken 1, 2 wirken im Betrieb auf den Zylinder 3 und Verschleiß tritt am Zylinder 3 im Bereich 9.00 bis 11.00 Uhr und 13.00 bis 15.00 Uhr auf. Je nach verarbeitetem Kunststoffmaterial wird die Verarbeitung nach einer bestimmten Betriebsdauer gestoppt, bei welcher der auftretenden Verschleiß noch so gering ist, dass sich die Ablagerung des Produkts am Verschleißbereich zu keiner wesentlichen Schädigung des Produkts führt.

Ist dieser Betriebspunkt erreicht, so wird die erste 1 und die zweite Schnecke 2 entkoppelt und die Schnecken 1, 2 werden getauscht, so dass die erste Schnecke 1 mittels einer der zwei Kupplungshülsen und die zweite Schnecke 2 mittels der anderen Kupplungshülse an das Getriebe gekoppelt wird. Zur Produktion wird nunmehr die Drehrichtung der Schnecken 1, 2 jeweils umgekehrt und der Extruder wird durch den Antrieb in einer zweiten Drehrichtung betrieben. Fig. 2 zeigt diese neue Drehrichtung. Der Verschleiß im Zylinder 3 erfolgt aufgrund des umgekehrten Druckprofils nunmehr im Bereich 7.00 bis 9.00 Uhr und 15.00 bis 17.00 Uhr.

Hinsichtlich weiterer Details wird zur Vermeidung von Wiederholungen auf die allgemeine Beschreibung verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

### Bezugszeichenliste

- 1: Erste Schnecke
- 2: Zweite Schnecke
- 3: Gehäuse
- F: Anpresskraft

## Patentansprüche

1. Vorrichtung zur Verarbeitung eines Materials, beispielsweise Kunststoff, Kautschuk oder dergleichen, mit einem Extruder, wobei der Extruder mindestens zwei Schnecken (1, 2) zur Bearbeitung des Materials aufweist, wobei die Schnecken (1, 2) gegensinnig rotierbar in einem Gehäuse (3) gelagert sind und mittels mindestens eines Antriebs antreibbar sind und wobei Übertragungselemente zur Übertragung der Kraft zwischen den Schnecken und dem Antrieb vorgesehen sind,
**dadurch gekennzeichnet, dass** die Schnecken (1, 2) bezüglich ihrer Position austauschbar sind und dass die Drehrichtung der Schnecken (1, 2) umkehrbar ist.

2. Vorrichtung nach Patentanspruch 1, **dadurch gekennzeichnet, dass** der Antrieb mindestens einen in zwei Drehrichtungen betreibbaren Motor umfasst.

3. Vorrichtung nach Patentanspruch 1 oder 2, **dadurch gekennzeichnet, dass** das Übertragselement als Kupplungshülse ausgestaltet ist.

4. Vorrichtung nach einem der Patentansprüche 1 bis 3, **dadurch gekennzeichnet, dass** der Antrieb mindestens ein Getriebe umfasst.

5. Vorrichtung nach einem der Patentansprüche 1 bis 4, **dadurch gekennzeichnet, dass** der Extruder als gegensinnig drehender Doppelschneckenextruder ausgestaltet ist.

6. Vorrichtung nach einem der Ansprüche 1 bis 5,
**dadurch gekennzeichnet, dass** ein Getriebe zur Kraftübertragung mit mindestens einem Zahnrad und/oder mindestens einem Ritzel vorgesehen ist, bei dem zur Kraftübertragung in unterschiedliche Drehrichtungen das Zahnrad und/oder das Ritzel gleiche Übertragungseigenschaften aufweist.

7. Vorrichtung nach Anspruch 6, **dadurch gekennzeichnet, dass** beide Profile der kraftübertragenden Flanken des Zahnrads und/oder Ritzels derart ausgebildet sind, dass bei beiden Drehrichtungen im Wesentlichen gleiche Kräfte übertragbar sind.

8. Verfahren zum Betreiben einer Vorrichtung zur Verarbeitung eines Materials, insbesondere einer Vorrichtung nach einem der Patentansprüche 1 bis 5, mit einem Extruder mit mindestens zwei gegensinnig rotierenden Schnecken, wobei die Schnecken (1, 2) mittels mindestens eines Übertragungselements am Antrieb gekoppelt werden, wobei die Schnecken (1, 2) durch den Antrieb in einer ersten Drehrichtung betrieben werden, und wobei die Verarbeitung von Material gestoppt wird,
**dadurch gekennzeichnet, dass** die Schnecken (1, 2) in ihrer Position getauscht und in einer zur ersten Drehrichtung umgekehrten Drehrichtung betrieben werden.

9. Verfahren nach Anspruch 8, **dadurch gekennzeichnet, dass** eine erste Schnecke (1) mittels eines Übertragungselements an einer ersten Position an dem Antrieb gekoppelt wird und eine zweite Schnecke (2) mittels eines weiteren Übertragungselements an einer zweiten Position an dem Antrieb gekoppelt wird und die Schnecken (1, 2) durch den Antrieb in einer ersten Drehrichtung betrieben werden und wobei die Verarbeitung von Material gestoppt wird und die erste (1) und die zweite Schnecke (2) entkoppelt werden und die erste Schnecke (1) mittels des oder des weiteren Übertragungselements an der zweiten Position des Antriebs und die zweite Schnecke (2) mittels des oder des weiteren Übertragungselements an der ersten Position des Antriebs gekoppelt wird und dass die Schnecken (1, 2) durch den Antrieb in einer zweiten zur ersten Drehrichtung umgekehrten Drehrichtung betrieben werden.

## Claims

1. Device for processing a material, for example plastic, rubber or suchlike, with an extruder, wherein the extruder has at least two screws (1, 2) for processing the material, wherein the screws (1, 2) are mounted so as to be rotatable in opposite directions in a housing (3) and are able to be driven by means of at least one drive, and wherein transmission elements are provided for transmission of the force between the screws and the drive, **characterized in that** the screws (1, 2) are exchangeable with regard to their position and that the direction of rotation of the screws (1, 2) is reversible.

2. Device according to Claim 1, **characterized in that** the drive comprises at least one motor which is able to be operated in two directions of rotation.

3. Device according to Claim 1 or 2, **characterized in that** the transmission element is embodied as a coupling sleeve.

4. Device according to one of Claims 1 to 3, **characterized in that** the drive comprises at least one gear.

5. Device according to one of Claims 1 to 4, **characterized in that** the extruder is embodied as an oppositely rotating double screw extruder.

6. Device according to one of Claims 1 to 5, **characterized in that** a gear for force transmission is provided with at least one gear wheel and/or at least one pinion, in which for force transmission in different directions of rotation, the gear wheel and/or the pinion has the same transmission characteristics.

7. Device according to Claim 6, **characterized in that** both profiles of the force-transmitting edges of the gear wheel and/or pinion are constructed such that substantially the same forces are able to be transmitted with both directions of rotation.

8. Method for operating a device for processing a material, in particular a device according to one of Claims 1 to 5, with an extruder with at least two screws rotating in opposite directions, wherein the screws (1, 2) are coupled to the drive by means of at least one transmission element, wherein the screws (1, 2) are operated by the drive in a first direction of rotation, and wherein the processing of material is stopped **characterized in that** the screws (1, 2) are exchanged in their position and are operated in a direction of rotation which is reversed with respect to the first direction of rotation.

9. Method according to Claim 8, **characterized in that** a first screw (1) is coupled to the drive by means of a transmission element in a first position and a second screw (2) is coupled to the drive by means of a further transmission element in a second position, and the screws (1, 2) are operated by the drive in a first direction of rotation and wherein the processing of material is stopped and the first screw (1) and the second screw (2) are uncoupled and the first screw (1) is coupled by means of the or the further transmission element in the second position of the drive and the second screw (2) is coupled by means of the or the further transmission element in the first position of the drive, and that the screws (1, 2) are operated by the drive in a second direction of rotation which is reversed with respect to the first direction of rotation.

## Revendications

1. Dispositif de traitement d'une matière, par exemple du plastique, du caoutchouc ou similaire, comprenant une extrudeuse, sachant que l'extrudeuse présente au moins deux vis (1, 2) pour traiter la matière, sachant que les vis (1, 2) sont disposées en pouvant tourner à contre-sens dans un logement (3) et peuvent être entraînées au moyen d'au moins un entraînement et sachant que des éléments de transmission destinés à transmettre la force entre les vis et l'entraînement sont prévus, **caractérisé en ce que** les vis (1, 2) sont interchangeables en ce qui concerne leur position et que le sens de rotation des vis (1, 2) peut être inversé.

2. Dispositif selon la revendication 1, **caractérisé en ce que** l'entraînement comprend au moins un moteur pouvant être utilisé dans deux sens de rotation.

3. Dispositif selon la revendication 1 ou 2, **caractérisé en ce que** l'élément de transmission est formé comme une douille d'accouplement.

4. Dispositif selon l'une des revendications 1 à 3, **caractérisé en ce que** l'entraînement comprend au moins un engrenage.

5. Dispositif selon l'une des revendications 1 à 4, **caractérisé en ce que** l'extrudeuse est formée comme une extrudeuse à double vis à rotation en contre-sens.

6. Dispositif selon l'une des revendications 1 à 5, **caractérisé en ce qu'**un engrenage comprenant au moins une roue dentée et/ou au moins un pignon est prévu, dans lequel, pour la transmission de force dans différents sens de rotation, la roue dentée et/ou le pignon présentent les mêmes propriétés de transmission.

7. Dispositif selon la revendication 6, **caractérisé en ce que** les deux profils des flancs transmettant la force de la roue dentée et/ou du pignon sont ainsi formés que dans les deux sens de rotation, les mêmes forces sont essentiellement transmissibles.

8. Procédé pour faire fonctionner un dispositif de traitement d'une matière, en particulier un dispositif selon l'une des revendications 1 à 5, comprenant une extrudeuse avec au moins deux vis tournant à contre-sens, sachant que les vis (1, 2) sont couplées sur l'entraînement au moyen d'au moins un élément de transmission, sachant que les vis (1, 2) sont entraînées par l'entraînement dans un premier sens de rotation et sachant que le traitement de la matière est arrêté, **caractérisé en ce que** les vis (1, 2) sont entraînées en étant échangées dans leur position dans un sens de rotation inversé par rapport au premier sens de rotation.

9. Procédé selon la revendication 8, **caractérisé en ce qu'**une première vis (1) est couplée sur l'entraînement sur une première position au moyen d'un élément de transmission et une deuxième vis (2) est couplée sur l'entraînement sur une deuxième position au moyen d'un autre élément de transmission et les vis (1, 2) sont entraînées par l'entraînement dans un premier sens de rotation et sachant que le traitement de la matière est arrêté et la première (1) et la deuxième (2) vis sont découplées et la première (1) vis est couplée au moyen de l'élément de transmission ou de l'autre élément de transmission sur la deuxième position de l'entraînement et la deuxième vis (2) est couplée au moins de l'élément de transmission ou de l'autre élément de transmission sur la première position de l'entraînement et que les vis (1, 2) sont entraînées par l'entraînement dans un deuxième sens de rotation inversé par rapport au premier sens de rotation.
